# EUROPÄISCHE PATENTSCHRIFT

(11) **EP 0 856 982 B1**
(45) Veröffentlichungstag und Bekanntmachung des Hinweises auf die Patenterteilung: **24.02.2010**
(21) Anmeldenummer: 97122598.2
(22) Anmeldetag: 20.12.1997
(51) Int. Cl.: H04M 11/02, H04M 9/00

(54) **Türfreisprechanlage**
Door answering equipment
Interphone

(30) Priorität: 04.02.1997 DE 19704026
(43) Veröffentlichungstag der Anmeldung: 05.08.1998
(73) Patentinhaber: Deutsche Telekom AG, 53113 Bonn (DE)
(72) Erfinder: Dihlmann, Klaus Dieter, Dipl.-Ing., 64839 Altheim (DE)

(56) Entgegenhaltungen:
- EP-A- 0 557 778
- DE-A- 19 524 204
- DE-A- 19 548 744
- US-A- 5 467 386

## Beschreibung

Die Erfindung betrifft eine Vorrichtung zum Anschließen von Türfreisprechstellen an eine Telekommunikationsanlage.

Gebräuchliche Anlagen mit Freisprech-Gegensprechverkehr sind mit Vierdraht-Verbindungen (4+n-Schnittstelle) verbunden. Es wird vorausgesetzt, daß Türsprechanlagen mit geringstmöglichem Verkabelungsaufwand realisiert werden sollten, also möglichst mit zweiadrigen Verbindungen. Auch sollten besondere Steuer-, Stromversorgungs- und Signalleitungen vermieden werden.

Die allgemein bekannten zweiadrigen Verbindungen sind meistens als Wechselsprechanlagen ausgeführt, bei denen die Sprechrichtung jeweils umgeschaltet werden muß.

Es sind auch Anlagen mit einer Außenstation und nur einer Innenstation bekannt, bei denen eine zweiadrige Verbindung für Rufen, Sprechen und Öffnen mit unterschiedlichen Spannungen bzw. Strömen genutzt wird (DE 3710 091). Diese sind fälschlich als zweiadrig bezeichnet, da zwischen der Außenstation und jeder Innenstation zwei Adern notwendig sind, die gegeneinander z.B. durch Dioden entkoppelt geführt sein müssen. Solche Anlagen sind problemlos realisierbar und sehr verbreitet. Die oben erwähnten prinzipiellen Voraussetzungen werden jedoch von solchen Anlagen nicht erfüllt.

Es sind auch Anlagen bekannt, bei denen Telefonanlagen mit einem Türfreisprechzusatz verbunden werden können. Der Sprechverkehr erfolgt dabei zwar zweiadrig; jedoch sind zusätzliche Leitungen für Stromversorgung und evtl. zusätzliche Steuerleitungen erforderlich.

Bei einer bekannten Gegensprechanlage (DE-OS 30 23 988) sind sämtliche Wohnungssprechstellen in Parallelschaltung an eine von der Türsprechstelle verlaufende zweiadrige Leitung angeschlossen und mit je einer Sende- und Empfangseinrichtung ausgestaltet, von denen jede eine auf einen ihr allein zugeteilten Binärcode eingestellte Codier- und Decodierschaltung enthält. Jeder Klingeltaste ist eine solche Codier- und Decodierschaltung zugeordnet. Eine solche Anlage erfordert eine große Zahl solcher unterschiedlich speziell auszuführenden Codier- und Decodierschaltungen. Erweiterungen und Ersatz, z.B. einer defekten Wohnungssprechstelle, sind sehr erschwert und nur von einem speziellen Wartungsdienst mit Code- Systemkenntnis durchführbar. An eine Verständigungsmöglichkeit der Wohnungssprechstellen miteinander ist dabei gar nicht gedacht. Eine Vielzahl weiterer Codierschaltungen mit Ruftasten müßten sonst den Wohnungssprechstellen zugeordnet werden.

Die aus DE 42 36 565 A1 bekannte Türfreisprechanlage vermeidet diese Nachteile und verwendet beliebig austauschbare handelsübliche Geräte in allen inneren (Wohnungs-) Sprechstellen an der zweiadrigen Leitung. Die Systemanpassung bzw. -Erweiterung um weitere Sprechstellen, und bei Gebäuden mit mehreren Eingängen mit einer weiteren Türsprechstelle ist möglich. Diese Türfreisprechanlage mit fernsprechtechnisch üblichen Mitteln hat den zusätzlichen Vorteil, daß jeder Teilnehmer nur einen Telefonapparat benötigt, mit dem er sowohl mit der Türsprechstelle als auch mit allen anderen inneren Teilnehmern und, wenn er Fernsprechteilnehmer ist, auch mit externen Fernsprechteilnehmern sprechen kann. Alle Nebenfunktionen, wie Signalisierung und Türöffnung zur Türsprechstelle werden ebenso ermöglicht wie die Beleuchtung der Türsprechstelle.

Probleme entstehen bei einer Erweiterung einer solchen Anlage für nacheinander zu passierende Türsprechstellen, wie z. B. für Garten- und Haustür. Die für verschiedene Funktionen benötigten unterschiedlichen Gleich- bzw. Wechsel- Spannungen und Ströme an der Türsprechstelle, verhindern deren Verbindung mit der Zweidrahtleitung, wenn gleichzeitig unterschiedlichen Funktionen gefordert werden.

Aus EP 0 557 778 A1 ist ein Telekommunikationssystem mit einem als Türfreisprechstelle ausgebildeten Sonderendgerät bekannt, welches über eine speziell ausgebildete Leitungsanschlußeinheit an das Telekommunikationssystem angeschlossen ist. Über eine Koppeleinrichtung des Telekommunikationssystems kann die Türsprechstelle mit anderen an das Telekommunikationssystem angeschlossenen Endgeräten verbunden werden.

Der Erfindung liegt daher die Aufgabe zugrunde, zwei und mehr Türsprechstellen an einer (zwei- oder mehradrigen) Telekommunikations-Anlage beliebig auch nacheinander benutzen zu können.

Dieses technische Problem löst die Erfindung mit den kennzeichnenden Merkmalen des Anspruchs 1.

Vorteilhafte Weiterbildungen sind in den Kennzeichen der Unteransprüche angegeben.

Die Erfindung wird nachfolgend anhand von Ausführungsbeispielen näher erläutert. In den zugehörigen Zeichnungen zeigen die:
- Fig. 1: ein vereinfachtes Blockschaltbild einer Türfreisprechanlage mit den Hauptelementen eines Verbindungsmoduls,
- Fig. 2: eine Türfreisprechanlage mit zwei Verbindungsmodulen in kaskadenartiger Schaltung,
- Fig. 3: eine Türfreisprechanlage mit einem Verbindungsmodul, von dem ein Anschluß zu einer Vierdraht-Schnittstelle geführt ist, und
- Fig. 4: eine Türfreisprechanlage mit einer TK-Anlage, die vor einem Verbindungsmodul eine Vierdraht-Schnittstelle aufweist, an die Türfreisprechstellen mit Zweidraht-Schnittstellen anschaltbar sind.

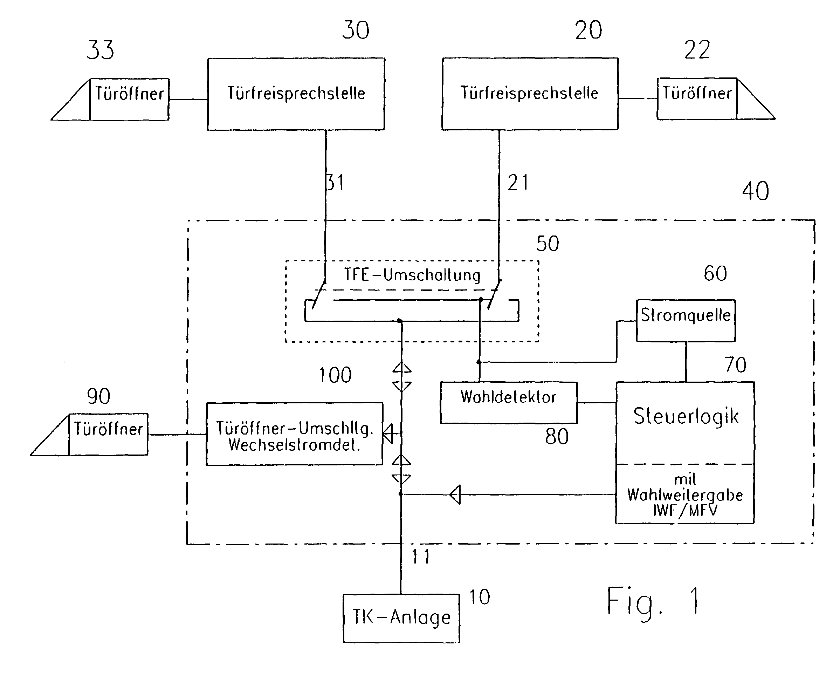

Figur 1 zeigt eine Türfreisprechanlage, die als bekannte Komponenten eine Telekommunikationsanlage 10 (im weiteren Text kurz als TK-Anlage bezeichnet) mit einer Zweidraht-Schnittstelle 11 und zwei Türfreisprechstellen 20 und 30 mit je einer Zweidraht-Schnittstelle 21 und 31 aufweisen. Bei der hier betrachteten Zweidraht-Schnittstelle kann es sich beispielsweise um die Telekom-Zweidraht-TFE-Schnittstelle handeln. Die Anschaltung einer Türsprechstelle mit einer Zweidraht-Schnittstelle an eine TK-Anlage mit einer Zweidraht-Schnittstelle ist in der DE-OS 42 36 565 ausführlich erklärt. Als neues Merkmal ist ein Verbindungsmodul 40 eingeführt und mit wesentlichen Bestandteilen dargestellt, das die gesteuerte Anschaltung einer der beiden Türfreisprechstellen 20, 30 an die TK-Anlage 10 ermöglicht.

Obgleich in diesem Beispiel nur zwei Türfreisprechstellen 20, 30 aufgeführt sind, kann das nachfolgende, hier beschriebene Verbindungsmodul 40 zur Anschaltung mehrerer Türfreisprechstellen ausgebildet sein. Auch ist es denkbar, daß sowohl die Türfreisprechstellen 20, 30 als auch die TK-Anlage 10 je eine Vierdraht-Schnittstelle anstelle der Zweidraht-Schnittstellen 11; 21 und 31 aufweisen.

In dem Verbindungsmodul 40 ist als erster Umschalter eine TFE-Umschaltung 50 angeordnet, an welche, über die Schnittstellen 21 und 31 die beiden Türfreisprechstellen 20, 30 angeschaltet sind. An diesen Umschalter 50 ist eine Stromquelle 60 angeschaltet, welche die nicht mit der TK-Anlage 10 verbundene Türfreisprechstelle 20 mit einem Ruhestrom versorgt.

Die Türfreisprechstellen 20, 30 sind ferner mit einem Wahldetektor 80 verbunden, der die von einer Türfreisprechstelle kommenden Wahlzeichen detektiert und sie an eine Steuereinrichtung bzw. Steuerlogik 70 weiter gibt. Die Steuerlogik 70 ist unter anderem mit dem ersten Umschalter 50 verbunden. Das Verbindungsmodul 40 besitzt darüber hinaus einen Anschluß für einen zusätzlichen Türöffner 90. Hierfür ist als zweiter Umschalter eine Türöffner-Umschaltung 100 mit einem Wechselstromdetektor vorgesehen. Dieser Detektor spricht auf einen von der TK-Anlage 10 kommenden Wechselstrom an und schaltet den zweiten Umschalter 100 derart, daß ein zusätzlich angeschlossener Türöffner 90 aktiviert werden kann.

Zweckmäßigerweise ist der erste Umschalter 50 derart ausgebildet, daß er die oder jede nicht an die TK-Anlage angeschaltete Türfreisprechstelle mit einer Stromquelle verbindet, welche die Türfreisprechstellen mit einem Ruhestrom speist. Dadurch ist es möglich, auch an den nicht an die TK-Anlage angeschalteten Türfreisprechstellen bestimmte Anlagenzustände zu signalisieren und die nicht angeschalteten Türfreisprechstellen in einem Bereitschaftszustand zu halten.

Das Verbindungsmodul 40 weist weiter eine Steuerlogik 70 und einen Wahldetektor 80 auf, wobei die Steuereinrichtung unter Ansprechen auf das von dem Wahldetektor erkannte Wahlzeichen die dieses Wahlzeichen aussendende Türfreisprechstelle über den ersten Umschalter mit der TK-Anlage verbindet.

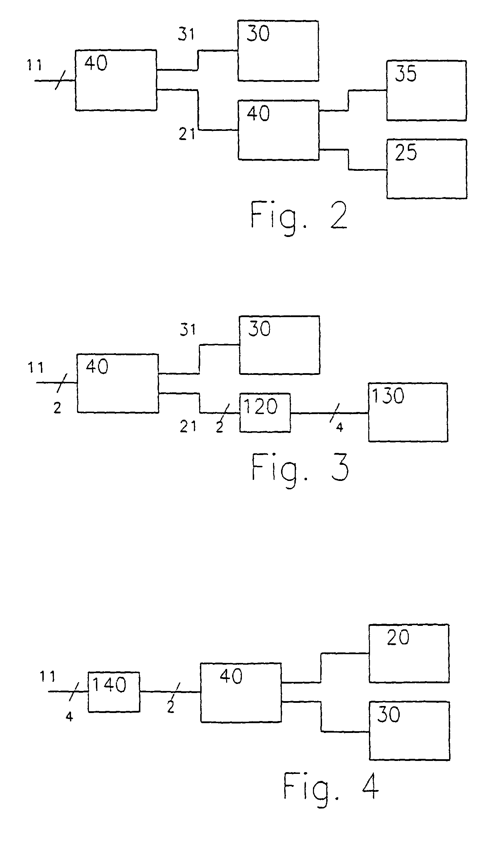

Wie in Fig. 2 an der Schnittstelle 21 dargestellt ist, können anstelle einer Türstation zwei oder mehrere Verbindungsmodule 40 kaskadenartig miteinander verbunden sein, um so beliebig viele Türfreisprechstellen an die TK-Anlage 10 anschalten zu können. Die beiden Verbindungsmodule sind jeweils mit einem Umschalter 50, einem Wahldetektor 80 und einer Steuerlogik 70 ausgerüstet, die auf Grund des übertragenen Wahlzeichens erkennen, welche der drei in Fig. 2 dargestellten Türfreisprechstellen mit der TK-Anlage verbunden werden soll.

Um die Flexibilität der Anlage zu steigern, kann an dem Verbindungsmodul 40 ein weiteres Verbindungsmodul 40 zur Kaskadierung von Türfreisprechstellen angeschlossen werden. Das Verbindungsmodul ist allgemein derart ausgebildet, daß es das Anschalten einer TK-Anlage mit einer Zweidraht-Schnittstelle an Türfreisprechstellen mit einer Zweidraht-Schnittstelle ermöglicht.

In Figur 3 ist eine weitere Ausführungsform einer Türfreisprechanlage dargestellt, die die Anschaltung einer Türfreisprechstelle 130 mit einer Vierdraht-Schnittstelle an die TK-Anlage 10 mit einer Zweidraht-Schnittstelle 120 ermöglicht. Dazu wird vor die Türfreisprechstelle 130 ein Anpassungsmodul 120, z. B. eine Gabelschaltung, an den Umschalter 50 angeschaltet. Die Kombination aus dem Verbindungsmodul 40 und dem Anpassungsmodul 120 gestattet es, eine bestehende Türsprechanlage mit Türfreisprechstellen, die Vierdraht-Schnittstellen aufweisen, an eine nachträglich installierte TK-Anlage anzuschalten, die eine Zweidraht-Schnittstelle besitzt. Die Türfreisprechanlage nach Fig. 3 kann auch derart abgeändert werden, daß an das Verbindungsmodul 40 mehrere Anpassungsmodule 120 zum Anschalten von Türfreisprechstellen mit einer Vierdraht-Schnittstelle angeschlossen werden können.

Um auch herkömmliche Türfreisprechstellen mit einer Vierdraht-Schnittstelle an das Verbindungsmodul anschalten zu können, kann ein Anpassungsmodul mit einer Zweidraht-Vierdraht-Umsetzeinrichtung 140 an das Verbindungsmodul angeschlossen werden.

In Fig. 4 ist eine weitere Ausführungsform einer Türfreisprechanlage dargestellt, die von einer TK-Anlage mit einer Vierdraht-Schnittstelle ausgeht. Um die beiden in Fig. 1 dargestellten Türfreisprechstellen 20, 30, die je eine Zweidraht-Schnittstelle aufweisen, über das Verbindungsmodul 40 an diese TK-Anlage anschalten zu können, ist ein Umsetzmodul 140 erforderlich, das eine Verbindung der Zweidraht-Schnittstelle des Verbindungsmoduls 40 mit einer Vierdraht-Schnittstelle der TK-Anlage ermöglicht.

Die Funktionsweise des Verbindungsmoduls 40 wird nachfolgend anhand von Fig. 1 erläutert. Jede Türfreisprechstelle 20 bzw. 30 aktiviert einen eigenen Türöffner 22, 23. Die Türfreisprechstelle 30 ist an der Schnittstelle 31 über das Verbindungsmodul 40 an die TK-Anlage 10 angeschaltet. Für die Signalisierung sind jedoch alle Türfreisprechstellen sendebereit. Gleichzeitig verbindet der Umschalter 50 die Türfreisprechstelle 20 mit der Stromquelle 60, die einen Ruhestrom liefert. Wird nun eine Klingeltaste an der Türfreisprechstelle 20 betätigt, wird diese Signalisierung an den Wahldetektor 80 angelegt. Der Wahldetektor 80 wertet das Wahlzeichen aus und legt das Ergebnis an die Steuerlogik 70 an.

Die Wahlzeichen werden entweder als IWV- oder als MFV-Wahlsignal zur TK-Anlage 10 weitergeleitet. Anschließend betätigt die Steuerlogik 70 unter Ansprechen auf das vom Wahldetektor 60 erkannte Wahlsignal den Umschalter 50 derart, daß nunmehr die Türfreisprechstelle 20 an die TK-Anlage 10 angeschaltet ist und die Türfreisprechstelle 30 mit einem Ruhestrom von der Stromquelle 60 gespeist wird. Diese Anschaltung bleibt so lange bestehen, bis eine Klingeltaste an der anderen, nicht zur TK-Anlage 10 durchgeschalteten Türfreisprechanlage 30 betätigt wird.

Danach wird die Anschaltung der beiden Türfreisprechstellen 20, 30 wieder vertauscht. Mit anderen Worten erfolgt ein Umschalten der beiden Türfreisprechstellen immer dann, wenn von einer nicht zur TK-Anlage 10 durchgeschalteten Türfreisprechstelle, im vorliegenden Fall von der Türfreisprechstelle 20, ein Wahlzeichen erzeugt wird. Dies kann auch geschehen, wenn die Türfreisprechstelle 30 sich im Gesprächszustand befindet. Daher wird ein zwischen der Türfreisprechstelle 30 und dem Fernsprechapparat eines gerufenen Teilnehmers der TK-Anlage 10 geführtes Gespräch automatisch zur Türfreisprechstelle 20 umlegt.

Der Wahldetektor 80 ist durch seine Anschaltung an die TFE-Umschaltung 50 immer mit der bzw. den nicht aktiven Türfreisprechstellen verbunden. Nach einem Gesprächsende wird immer die zuletzt aktive Türfreisprechstelle aus der TK-Anlage mit Ruhestrom gespeist. Die zuletzt nicht aktive Türfreisprechstelle wird vom Verbindungsmodul 40 gespeist.

Angenommen, daß der gerufene Teilnehmer an seinem Fernsprechapparat, der sich im Gesprächszustand mit einer Türsprechstelle 30 befindet eine Ziffer, z. B. die Ziffer 9, eingibt, deren Auswertung in der TK-Anlage 10 vorgenommen wird, wird an der Zweidrahtleitung 11 der TK-Anlage 10 eine Wechselspannung für eine definierte Zeit angelegt.

Der an die Türsprechstelle 30 direkt angeschlossene Türöffner 33 wird aktiviert. Es kann zusätzlich, direkt an das Verbindungsmodul 40 ein weiterer Türöffner 90 angeschaltet sein, der immer aktiviert wird, egal zu welcher Türsprechstelle 20; 30 die TFE- Umschaltung 50 durchgeschaltet hat.

Alternativ kann an der zweiten Tür die Türfreisprechstelle 20 angebracht sein. Dann muß der Besucher eine Klingeltaste an der Türfreisprechstelle 20 drücken. Das bisher über die Türfreisprechstelle 30 geführte Gespräch wird automatisch über den Umschalter 50 des Verbindungsmoduls 40 zur Türfreisprechstelle 20 umgelegt. Der gerufene Teilnehmer kann wiederum an seinem Fernsprechapparat mit der Eingabe einer Ziffer, beispielsweise der Ziffer 9, den der Türfreisprechstelle 20 zugeordneten Türöffner aktivieren, um die zweite Tür zu öffnen.

## Patentansprüche

1. Vorrichtung zum Anschließen von Türfreisprechstellen (20, 30) an eine Telekommunikationsanlage,
**dadurch gekennzeichnet,**
**dass** die Vorrichtung (40) einen ersten Umschalter (50), einer Stromquelle (60), eine Steuerlogik (70) und einen Wahldetektor (80)
**umfasst, wobei die Steuerlogik (70) dazu ausgebildet ist,** unter Ansprechen auf ein von dem Wahldetektor (80) erkanntes, von einer Türfreisprechstelle (20, 30) kommendes Wahlzeichen nur **die** dieses **Wahlzeichen aussendende** Türfreisprechstelle (30) **über den ersten Umschalter (50)** an die Telekommunikationsanlage (10) anzuschalten, und **der erste Umschalter (50) derart ausgebildet ist, dass er jede nicht an die Telekommunikationsanlage (10) angeschaltete** Türfreisprechstelle (20) mit der Stromquelle (60) verbindet, um die nicht angeschaltete(n) Türfreisprechstellen(n) (20) mit einem Ruhestrom zu speisen.

2. Vorrichtung nach Anspruch 1,
**dadurch gekennzeichnet,**
**dass** die Vorrichtung (40) einen Anschluss für einen zusätzlichen Türöffner (90) und einen **zweiten Umschalter** (100) mit Wechselstromdetektor enthält, **wobei** der **Wechselstromdetektor** bei Ansprechen auf einen Wechselstrom über den zweiten Umschalter **(100)** den zusätzlich angeschlossenen Türöffner (90) aktiviert.

3. Vorrichtung nach **einem der** Ansprüche 1 **oder 2**,
**dadurch gekennzeichnet,**
**dass** die Vorrichtung (40) weitere Anschlüsse (21, 31) aufweist, an denen eine zusätzliche Vorrichtung (40) zur Kaskadierung von Türfreisprechstellen anschaltbar ist.

4. Vorrichtung nach einem der Ansprüche 1 bis 3,
**dadurch gekennzeichnet,**
**dass** die Telekommunikationsanlage (10) und die Türfreisprechstellen (20, 30) je mit einer Zweidraht-Schnittstelle ausgerüstet und über die Vorrichtung (40) miteinander verbindbar sind.

5. Vorrichtung nach **einem der** Ansprüche 1 bis 4,
**dadurch gekennzeichnet,**
**dass** an die Vorrichtung (40) ein Anpassungsmodul (140) mit einer Zweidraht-Vierdraht-Umsetzeinrichtung anschaltbar ist, über das Türfreisprechstellen (20, 30) mit einer Vierdraht-Schnittstelle an die Vorrichtung (40) anschaltbar sind.

## Claims

1. Device for connecting door entry telephones (20, 30) to a telecommunications system,
**characterized in that**
the device **(40) includes** a first changeover switch (50), a current source (60), a control logic unit (70) and a dialing detector (80), **wherein the control logic unit (70) is designed to** respond to a dialing signal arriving from a door entry telephone (20, 30) that **is detected by the dialing detector (80)** by connecting only **the** door entry telephone (30) **sending this dialing signal** to the telecommunications system (10) **through the first changeover switch (50),** and **the first changeover switch (50) is designed such that it** connects every door entry telephone (20) **that is not connected to the telecommunications system (10)** to **the** current source (60) in order to supply the unconnected door entry telephone(s) (20) with a quiescent current.

2. Device according to claim 1,
**characterized in that**
the device (40) contains a connection for an additional door opener (90) and a **second changeover switch** (100) with an alternating current detector, **wherein** the **alternating current detector** activates the additionally connected door opener (90) through **the** second changeover switch **(100)** in response to an alternating current.

3. Device according to **any one of** claims 1 **or 2,**
**characterized in that**
the device (40) has additional connections (21, 31) to which an additional device (40) for cascading of door entry telephones can be connected.

4. Device according to any one of claims 1 through 3,
**characterized in that**
the telecommunications system (10) and the door entry telephones (20, 30) are each equipped with a two-wire interface and can be connected to one another through the device (40).

5. Device according to any one of claims 1 **through 4,**
**characterized in that**
an adapter module (140) with a two-wire/four-wire converter can be connected to the device (40), by which means door entry telephones (20, 30) having a four-wire interface can be connected to the device (40).

## Revendications

1. Dispositif de connexion d'interphones de porte mains libres (20, 30) à une installation de télécommunication, **caractérisé en ce que** le dispositif (40) comprend un premier commutateur (50), une source de courant (60), une logique de commande (70) et un détecteur de tonalité (80),
la logique de commande (70) étant conçue de manière à ne connecter à l'installation de télécommunication (10) par l'intermédiaire du premier commutateur (50), en réponse à une tonalité détectée par le détecteur de tonalité (80) et venant d'un interphone de porte mains libres (20, 30), que l'interphone de porte mains libres (30) qui envoie cette tonalité, et **en ce que** le premier commutateur (50) est réalisé de manière à raccorder chaque interphone de porte mains libres (20) non connecté à l'installation de télécommunication (10) à la source de courant (60) afin d'alimenter le ou les interphone(s) de porte mains libres (20) non connecté(s) en un courant de repos.

2. Dispositif selon la revendication 1,
**caractérisé en ce que** le dispositif (40) comporte une sortie pour le raccordement d'une gâche automatique (90) supplémentaire et un deuxième commutateur (100) doté d'un détecteur de courant alternatif, le détecteur de courant alternatif activant la gâche automatique (90) raccordée en plus, en réponse à un courant alternatif par l'intérmédiaire du deuxième commutateur (100).

3. Dispositif selon l'une des revendications 1 ou 2,
**caractérisé en ce que** le dispositif (40) comporte des sorties (21, 31) supplémentaires auxquelles peut être connecté un dispositif supplémentaire (40) pour le raccordement en cascade d'interphones de porte mains libres.

4. Dispositif selon l'une des revendications 1 à 3,
**caractérisé en ce que** l'installation de télécommunication (10) et les interphones de porte mains libres (20, 30) sont équipés respectivement d'une interface deux fils et aptes à être reliés entre eux par l'intermédiaire du dispositif (40).

5. Dispositif selon l'une des revendications 1 à 4,
**caractérisé en ce qu'**un module adaptateur (140) peut être connecté au dispositif (40) au moyen d'un système de conversion deux fils / quatre fils par l'intermédiaire duquel des interphones de porte mains libres (20, 30) peuvent être connectés au dispositif (40) au moyen d'une interface quatre fils.
